# EUROPEAN PATENT APPLICATION

(11) **EP 3 528 521 A1**
(43) Date of publication of application: **21.08.2019**
(21) Application number: 19157694.1
(22) Date of filing: 18.02.2019
(51) Int. Cl.: H04W 12/00, H04W 84/18, H04W 12/04

(54) **SYSTEMS AND METHODS FOR PAIRING MULTIPLE DEVICES VIA A SHORT-RANGE WIRELESS COMMUNICATION MESH NETWORK**

(30) Priority: 17.02.2018 US 201815898463
(71) Applicant: Laird Technologies, Inc., Chesterfield, MO 63017 (US)
(72) Inventor: Tailor, Mahendra, Chesterfield, MO 63017 (US); Saeed, Youssif Abdulmuhsin M., Chesterfield, MO 63017 (US)
(74) Representative: AWA Sweden AB

(57) **Abstract**

According to various aspects, exemplary embodiments are disclosed of systems and methods for pairing multiple devices via a short-range wireless communication mesh network. In an exemplary embodiment, the system includes multiple node devices, and the multiple node devices are arranged in a short-range wireless communication mesh network. The system also includes a provisioner device. The provisioner device is in short-range wireless communication with each of the multiple node devices. The provisioner device is configured to, for each unique pairing of two of the multiple node devices, generate a unique random key for said unique pairing and transmit the generated random key to both of the two corresponding node devices in said unique pairing. Each node device is configured to store each received unique random key in a database of said node device, to establish all unique pairings for said node device.

## Description

### FIELD

The present disclosure generally relates to systems and methods for pairing multiple devices via a short-range wireless communication mesh network.

### BACKGROUND

This section provides background information related to the present disclosure which is not necessarily prior art.

In an Internet of things (IoT) setting (*e.g*., industrial, medical, *etc.*) where BLUETOOTH Low Energy (BLE) is deployed for wireless sensing and monitoring, a commissioning task is usually performed to pair two devices so they can share a secret key to allow all subsequent connections to be encrypted. If the network has, for example, ten devices that all need to share encrypted information between one another, there must be 10x9/2=45 pairings that have to be expedited, which can be time consuming. Pairing is generally a procedure that results in a shared 128 bit value stored in permanent memory at each of the two paired devices.

### DRAWINGS

The drawings described herein are for illustrative purposes only of selected embodiments and not all possible implementations, and are not intended to limit the scope of the present disclosure.
FIG. 1 is a block diagram of a system for pairing multiple devices via a short-range wireless communication mesh network according to one example embodiment of the present disclosure;
FIG. 2 is a block diagram of one of the node devices and the provisioner device of the system of FIG. 1; and
FIG. 3 is a flow chart of a method for pairing multiple devices via a short-range wireless communication mesh network according to another example embodiment of the present disclosure.

Corresponding reference numerals indicate corresponding parts throughout the several views of the drawings

### DETAILED DESCRIPTION

Example embodiments will now be described more fully with reference to the accompanying drawings.

The inventors have recognized that in an Internet of things (IoT) setting (*e.g*., industrial, medical, *etc.*) where short-range wireless communication networks (*e.g.* BLUETOOTH Low Energy (BLE), *etc.*) are deployed for wireless sensing and monitoring, a commissioning task is usually performed to pair two node devices so they can share a secret key to allow all subsequent connections to be encrypted.

If the short-range wireless communication network has, for example, ten devices that all need to share encrypted information between one another, there must be 10x9/2=45 pairings that have to be expedited, which can be time consuming. Pairing is generally a procedure that results in a shared value stored in memory at each of the two paired node devices. As the IoT grows, there might be hundreds if not thousands of devices in a short-range wireless communication network that need to share encrypted information between one another such that there would be significantly more than 45 pairings.

The inventors, however, have recognized that it is possible to use a short-range wireless communication mesh network to quickly deploy the shared secret keys without having to actually perform a pairing procedure between every unique pair of node devices. The deployment of the secret keys to the node devices can be performed from a convenient central provisioner device, such as a smartphone, another smart device, an embedded device, *etc.*

Disclosed herein are exemplary embodiments of systems and methods for pairing multiple devices via a short-range wireless communication mesh network. In some embodiments, a mesh network model (*e.g*., a vendor specific mesh network model, *etc.*) contains at least one opcode message and associated data that can be used to publish new pairing keys to pairs of node devices.

This allows each node device to be added to the trusted device database of the other node device in the pair. The action of adding the published pairing key information in the trusted device database or each node device results in the appropriate node devices being paired, without actually having to use a normal pairing procedure between the two node devices (*e.g*., a normal pairing procedure as described in a BLUETOOTH specification, *etc.*).

For example, in some deployments (*e.g*., an Internet of things (IOT) deployment, a medical wireless sensor deployment, an industrial wireless sensor deployment, *etc.*), the node devices will power on initially in a mesh unprovisioned state. A provisioner device (*e.g*., a smartphone, other smart device, embedded device, *etc.*) will provision the node devices into a mesh collective network.

The provisioner device can then generate random keys via a random number generator, *etc*., and use an opcode message to deploy the generated random keys to the node devices. Once the node devices are configured as described above to store their random keys, the node devices can leave the mesh network.

Therefore, example embodiments described herein may simplify the deployment and commissioning of wireless sensor networks by avoiding performing a time consuming pairing procedure for every unique pairing combination of node devices, and instead deploying pairing keys directly to the node devices to establish the node device pairings.

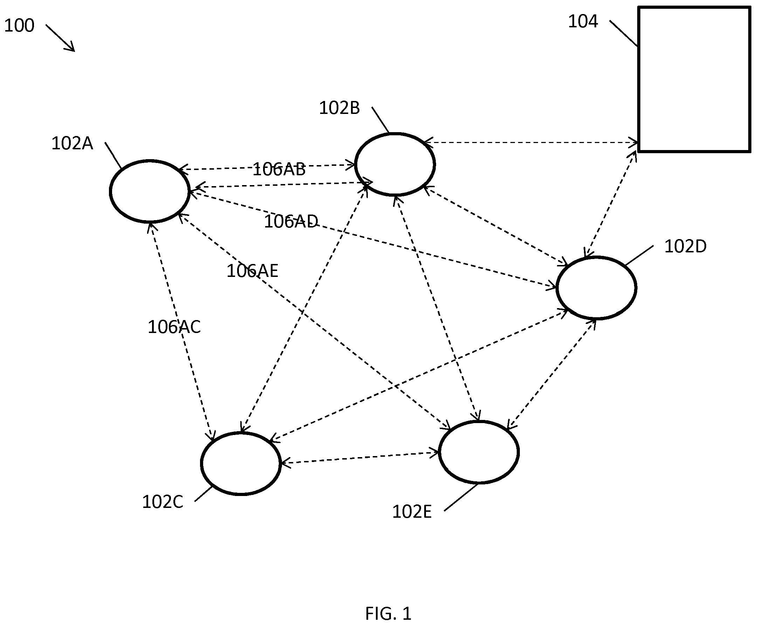

With reference to the figures, FIG. 1 illustrates a system 100 for pairing multiple devices via a short-range wireless communication mesh network, according to some aspects of the present disclosure. The system 100 includes multiple node devices 102A-102E. Each node device 102A-102E is arranged in a short-range wireless communication mesh network.

The system 100 also includes a provisioner device 104. The provisioner device 104 is in short-range wireless communication with each of the multiple node devices 102A-102E. The provisioner device 104 is configured to, for each unique pairing of two of the multiple node devices 102A-102E, generate a unique random key for the unique pairing.

The provisioner device 104 then transmits the generated random key to the two corresponding node devices in the unique pairing. Each node device 102A-102E is configured to store each received unique random key in a database of the node device, to establish all unique pairings for the node device.

For example, node device 102A has four unique pairings, which include one pairing with each of the other four node devices 102B-102E. Specifically, as shown in FIG. 1, the node device 102A establishes a pairing 106AB with the node device 102B, establishes another pairing 106AC with the node device 102C, establishes a further pairing 106AD with the node device 102D, and establishes yet another unique pairing 106AE with the node device 102E. The node devices 102B-102E also establish six more unique pairings between one another, which are illustrated but not referenced in FIG. 1.

As described above, the system 100 allows each node device 102A-102E to establish all unique pairings for the node device without actually performing any pairing procedures with other node devices. Therefore, all unique pairings in the system 100 can be established without the need to perform separate pairing procedures for every unique pairing between node devices (*e.g*., pairing 106AB, pairing 106AC, pairing 106AD, pairing 106 AE, *etc.*).

The provisioner device 104 may be configured to transmit the unique random keys to the corresponding node devices 102A-102E using an opcode message. For example, the opcode message may be any suitable message defined by the short-range wireless communication network, defined by a specific vendor, *etc.*

In some embodiments, each node device 102A-102E may be configured to initially power on (*e.g*., power up, *etc.*) in a mesh unprovisioned state. The provisioner device 104 can then provision each node device 102A-102E into the short-range wireless communication mesh network, using any suitable provisioning messages, commands, *etc.*

The node devices 102A-102E may be configured to leave the short-range wireless communication mesh network after receiving all of the corresponding unique random keys for the devices. For example, the node devices 102A-102E may be provisioned into the mesh network by the provisioner device 104 to receive the unique random keys, but then may leave the provisioned mesh network and continue future communication based on the stored unique random keys and their associated pairings with other node devices.

As shown in FIG. 1, there are five node devices 102A-102E, and ten unique pairings between the node devices 102A-102E (four of which are labeled 106AB-106AD). In general, for systems having N node devices, a total of N * (N-1) / 2 unique pairings are possible. Therefore, the provisioner device 104 may be configured to generate a total of N * (N-1) / 2 unique random keys to provide to the node devices.

However, in some embodiments, the provisioner device 104 may not generate a unique random key for every possible unique pairing (*e.g*., where some node devices will not communicate with all of the other node devices, *etc.*). In those cases, the provisioner device 104 may generate less than N * (N-1) / 2 unique random keys.

Each random key may comprise any suitable size and type of stored key data. For example, each random key may be a 128 bit value stored in a database (*e.g*., a trusted device database, *etc.*) in a memory of a node device. A node device 102A-102E may store as many unique keys as there are other devices to which the node device is uniquely paired. This number may be constrained by a size of the database in memory (*e.g*., how much non-volatile memory is allocated to the database, *etc.*). For example, a node device may be able to store about sixteen unique random keys for pairing with up to sixteen other node devices, *etc.*

The provisioner device 104 may generate the random keys using any suitable approach, including a random number generator, *etc.* Once a random key is generated and transmitted to two paired node devices, the provisioner device 104 may delete the random key before moving on to generation and transmission of a new random key for another unique pairing. This can prevent the provisioner device 104 from storing a record of all unique keys, which could be harmful to security of the unique pairings if a unique key record list were obtained by a third party, *etc.*

Each node device 102A-102E may comprise any suitable short-range wireless communication node. For example, each node device 102A-102E may comprise a BLUETOOTH short-range wireless communication node. The BLUETOOTH node may be a BLUETOOTH low energy (BLE) node, which operates according to a BLE protocol. Each node may be any suitable Internet of things (IoT) device, a medical wireless sensor device, an industrial wireless sensor device, *etc.*

In some embodiments, the short-range wireless communication network may be a BLE mesh network. A vendor specific model may be created including a 32 bit integer. The 32 bit integer may include a company identifier (ID), which can be 16 bits. Another 16 bits can be maintained by a vendor.

In this case, the BLE mesh network model includes an array of opcodes and associated data. Each opcode defines a certain action for a node device to take. A vendor may define their own opcodes (*e.g*., up to 64 opcodes, *etc.*), which can be part of a 24 bit number. For example, a lower 16 bits of the opcode may belong to a company ID, while six other bits are maintained by the vendor and the last two bits are set to a default value. The six bits of the opcode can be used to instruct the node devices to store randomly generated keys from the provisioner device in a trusted database of the node devices.

For example, a vendor can define one or more opcodes that convey data necessary to expedite remote pairing of two node devices. The data can include a long term pairing key, a BLUETOOTH mac address, any other information that is necessary for the local trusted device database(s), *etc.* There could be another optional opcode message to acknowledge receipt of the unique pairing key.

When one of the node devices is shipped, *etc*., the node device may be in an unprovisioned state. Later, the node device can be forced into an unprovisioned state by a provisioner at any desired time. Further, if the node device is not part of a network for a threshold period of time (*e.g*., 48 days, *etc.*), the node device may return to the unprovisioned state.

When an unprovisioned node device powers up it will start sending a specific BLE advert that has a unique device ID which tells any provisioner device in the vicinity that the node device needs provisioning. At the point, the provisioner device may alert a user that a node device capable of some service is available, and may prompt the user to provision the node device.

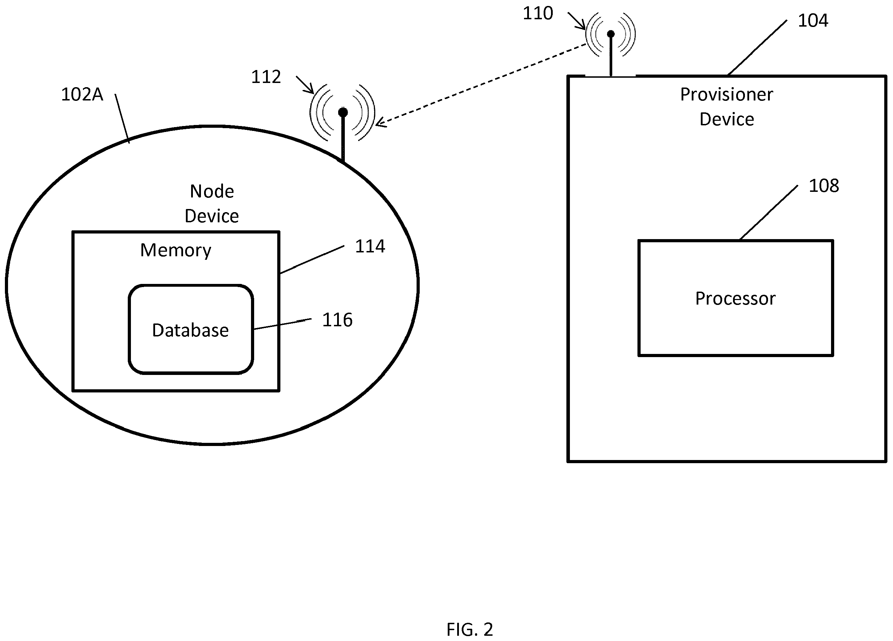

FIG. 2 illustrates communication between the provisioner device 104 and the node device 102A in the system 100. As shown in FIG. 2, the provisioner device 104 includes a processor 108 and a short-range wireless communication interface 110. The short-range wireless communication interface 110 can be any suitable antenna, *etc.* for transmitting short-range wireless communication messages to the node device 102A.

The provisioner device 104 can generate the random keys via the processor 108 (*e.g.* using a random number generator, *etc.*), and can transmit the generated random keys to the node device 102A via the short-range wireless communication interface 110. Although not shown in FIG. 2, it should be apparent that the provisioner device 104 may include a user interface for receiving input (*e.g*., commands, *etc.*) from a user, a display (*e.g*., a liquid crystal display (LCD), light emitting diodes (LED), indicator lights, *etc.*), an input element (*e.g*., a keypad, touchscreen, switches, *etc.*), *etc.*

The node device 102A includes a short-range wireless communication interface 112. The short-range wireless communication interface 112 can be any suitable antenna, *etc.* for receiving short-range wireless communication messages from the provisioner device 104. For example, the node device 102A may receive the generated random keys from the provisioner device 104 via the short-range wireless communication interface 112.

The node device 102A also includes a memory 114, which has a database 116. The database 116 may be a trusted device database, and can store the generated random keys received from the provisioner device 104. The node device 102A can then use the random keys stored in the database 116 for paired communication with other node devices.

As described herein, the example provisioner devices and node devices may include a microprocessor, microcontroller, integrated circuit, digital signal processor, *etc*., which may include memory. The provisioner devices and node devices may be configured to perform (*e.g*., operable to perform, *etc.*) any of the example processes described herein using any suitable hardware and/or software implementation. For example, the provisioner devices and node devices may execute computer-executable instructions stored in a memory, may include one or more logic gates, control circuitry, *etc.*

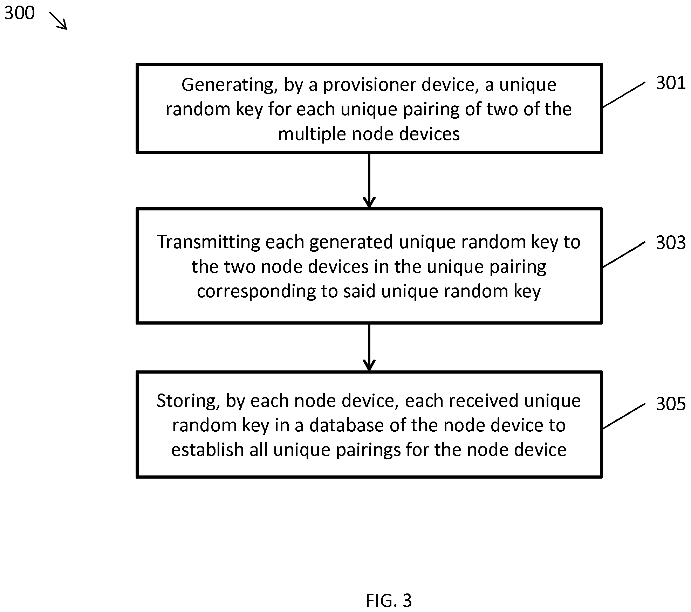

According to another example embodiment, an exemplary method 300 for pairing multiple devices via a short-range wireless communication mesh network is disclosed, and illustrated in FIG. 3. The short-range wireless communication mesh network includes multiple node devices.

The exemplary method 300 generally includes generating, by a provisioner device, a unique random key for each unique pairing of two of the multiple node devices, at 301. The method 300 further includes transmitting each generated unique random key to the two node devices in the unique pairing corresponding to the unique random key, at 303. In addition, the method includes storing, by each node device, each received unique random key in a database of the node device to establish all unique pairings for the node device, at 305.

In some embodiments, each node device may establish all unique pairings for the node device without performing a pairing procedure with any other ones of the multiple node devices. The provisioning device can transmit the generated unique random keys to the corresponding node devices using an opcode message.

The method may include initially powering on, by each node device, in a mesh unprovisioned state, and provisioning each node device into the short-range wireless communication mesh network. Each node device may leave the short-range wireless communication mesh network after receiving all of corresponding unique random keys for said node device.

In some embodiments, each unique random key comprises a 128 bit value stored in a memory database of each of the two corresponding node devices in the unique pairing. The multiple node devices may comprise N node devices, and the provisioner can generate N *(N-1) / 2 unique random keys. In some cases, each node device is a BLUETOOTH short-range wireless communication low energy (BLE) device. The method may also include using the corresponding unique random key to encrypt packets transmitted between the two corresponding node devices in the unique pairing.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purposes of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i.e*., the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e.g*., "between" versus "directly between," "adjacent" versus "directly adjacent," *etc.*). As used herein, the term "and/or" includes any and all combinations of one or more of the associated listed items.

Although the terms first, second, third, *etc.* may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A system for pairing multiple devices via a short-range wireless communication mesh network, the system comprising:
multiple node devices, the multiple node devices arranged in a short-range wireless communication mesh network; and
a provisioner device, the provisioner device in short-range wireless communication with each of the multiple node devices;
wherein the provisioner device is configured to, for each unique pairing of two of the multiple node devices, generate a unique random key for said unique pairing and transmit the generated unique random key to both of the two corresponding node devices in said unique pairing; and
wherein each node device is configured to store each received unique random key in a database of said node device, to establish all unique pairings for said node device.

2. The system of claim 1, wherein:
each node device is configured to establish all unique pairings for said node device without said node device performing a pairing procedure with any other ones of the multiple node devices; and/or
the provisioner device is configured to transmit the generated unique random keys to the corresponding node devices using an opcode message.

3. The system of claim 1, wherein:
each node device is configured to initially power on in a mesh unprovisioned state; and
the provisioner device is configured to provision each node device into the short-range wireless communication mesh network.

4. The system of claim 3, wherein each node device is configured to leave the short-range wireless communication mesh network after receiving all of the corresponding unique random keys for said node device.

5. The system of any one of the preceding claims, wherein:
the multiple node devices comprise N node devices; and
the provisioner device is configured to generate N * (N-1) / 2 unique random keys.

6. The system of claim 5, wherein:
the provisioner device is configured to delete each generated unique random key after said unique random key is transmitted to each of the two corresponding node devices in said unique pairing; and/or
each unique random key comprises a 128 bit value stored in a memory database of each of the two corresponding node devices in said unique pairing.

7. The system of any one of the preceding claims, wherein each node device is configured to store at least sixteen unique random keys for unique pairings with at least sixteen other ones of the multiple node devices.

8. The system of any one of the preceding claims, wherein each node device comprises a BLUETOOTH short-range wireless communication device.

9. The system of claim 8, wherein each node device comprises a BLUETOOTH short-range wireless communication low energy (BLE) device.

10. The system of any one of the preceding claims, wherein:
the provisioner device comprises a smartphone, other smart device, and/or an embedded device; and/or
the short-range wireless communication mesh network is one of an Internet of things (IoT) sensor network, a medical wireless sensor network, and an industrial wireless sensor network.

11. A method for pairing multiple devices via a short-range wireless communication mesh network, the short-range wireless communication mesh network including multiple node devices, the method comprising:
generating, by a provisioner device, a unique random key for each unique pairing of two of the multiple node devices;
transmitting, by the provisioner device, each generated unique random key to both of the two node devices in the unique pairing corresponding to said unique random key; and
storing, by each node device, each received unique random key in a database of said node device to establish all unique pairings for said node device.

12. The method of claim 11, wherein:
each node device establishes all unique pairings for said node device without said node device performing a pairing procedure with any other ones of the multiple node devices; and/or
the provisioning device transmits the generated unique random keys to the corresponding node devices using an opcode message.

13. The method of claim 11 or 12, further comprising:
initially powering on, by each node device, in a mesh unprovisioned state; and
provisioning, by the provisioner device, each node device into the short-range wireless communication mesh network.

14. The method of claim 13, further comprising leaving, by each node device, the short-range wireless communication mesh network after receiving all of corresponding unique random keys for said node device.

15. The method of any one of claims 11 to 14, wherein:
each unique random key comprises a 128 bit value stored in a memory database of each of the two corresponding node devices in said unique pairing; the multiple node devices comprise N node devices; and the provisioner device generates N *(N-1) / 2 unique random keys; and/or
each node device is a BLUETOOTH short-range wireless communication low energy (BLE) device; and/or
the method includes using the corresponding unique random key to encrypt packets transmitted between the two corresponding node devices in said unique pairing.
